# EUROPEAN PATENT APPLICATION

(11) **EP 2 383 239 A2**
(43) Date of publication of application: **02.11.2011**
(21) Application number: 11164163.5
(22) Date of filing: 28.04.2011
(51) Int. Cl.: C04B 35/18, C04B 35/19, C04B 38/04

(54) **Porous body and method of producing the same**

(30) Priority: 30.04.2010 JP 2010105366
(71) Applicant: Nippon Sheet Glass Company, Limited, Tokyo 108-6321 (JP)
(72) Inventor: Emori, Ikuko, Tokyo 108-6321 (JP); Takahashi, Koji, Tokyo 108-6321 (JP)
(74) Representative: Koepe & Partner

(57) **Abstract**

The present invention provides a porous body having a pH adjusting function. This porous body can be obtained by a method including the steps of: preparing a mixture including a glass powder A containing an alkali component, a powder B including at least one crystal selected from a) a clay mineral that has a layered crystal structure and b) a zeolite, and a powder C of a water-soluble inorganic salt, the mixture containing 0.05 to 3 parts by mass of the powder B and 0.2 to 4 parts by mass of the powder C with respect to 1 part by mass of the glass powder A; forming the mixture into a shaped body; firing the shaped body at a temperature lower than a melting point of the water-soluble inorganic salt and equal to or higher than a softening point of the glass contained in the glass powder A to obtain a fired body; and leaching the water-soluble inorganic salt from the fired body to obtain a granular porous body. The main component of the powder B is at least one crystal selected from a 1:1 type mineral, a 2:1 type mineral other than a smectite mineral, a mixed-layer type mineral, a 2:1 ribbon type mineral, and a zeolite.

## Description

The present invention relates to a porous body, and more particularly to a method of producing the same. A porous body obtained by the present invention can be used, for example, as a support for catalysts.

It is desirable that a porous body used as a support for catalysts or the like have a large specific surface area. Such a support also is required to have high strength and heat resistance. Glass is a material capable of exhibiting these properties required for supports, and has high chemical stability and formability. Therefore, studies of porous bodies containing glass as a main component are in progress.

JP 2002-321988 A discloses a method of producing a porous body by firing a mixture of slag glass and clay. When this mixture is fired at a high temperature, the slag glass foams, and the slag glass foams are bound with the clay to form a porous body. The mixture should be fired at a temperature of 900°C or higher for the sufficient foaming of the slag glass (see paragraphs [0058] and [0065]).

JP 2002-321988A discloses that 10% by weight or less, preferably 3.0 to 5.0% by weight, of a foaming agent may be added to the slag glass, and that an alkali component such as sodium carbonate, or a boron-based additive such as boric acid is suitably used as the foaming agent (see paragraphs [0049] and [0050]). The melting point of sodium carbonate is 851°C. This means that the mixture is fired at a temperature above the melting point of sodium carbonate as a foaming agent to obtain a porous body in JP 2002-321988A.

Although the composition of slag glass varies according to its source, it contains no more than a total of about 5% by mass of alkali components, more specifically alkali metal oxides such as Na₂0 and K₂0, regardless of whether the slag glass is obtained from incinerated ash or in a metal smelting process.

Porous bodies obtained from natural glasses also are known. JP 2001-302366 A discloses a method of producing a porous body by firing a mixture containing a foamed natural glass such as perlite or shirasu balloon, a clay, and additives such a pH adjuster, etc. Since the mixture already contains the foamed glass, there is no need to fire the mixture at a high temperature close to 1000°C. A temperature at which the clay added as a binder can achieve its full effect is 750°C or higher when perlite is used, and 700°C or higher when shirasu balloon is used (see paragraphs [0020] and [0022]). Perlite and shirasu balloon are natural glasses containing silicon dioxide (SiO₂) as a main component and a total of less than 10% by mass of alkali components, more specifically alkali metal oxides such as Na₂O and K₂O.

In this production method, bentonite, is used as a clay suitable for a binder. Bentonite is a highly plastic clay containing montmorillonite as a main component. In Examples of JP 2001-302366 A, 25% by weight of bentonite and 65% by weight or more of a natural glass are used to obtain the porous body. In other words, the mixture of these bentonite and natural glass constitutes the main component of the porous body. In addition to the binder, a pH adjuster is added to the mixture for some applications of the porous body. Specific examples of the pH adjuster are zeolite, calcium carbonate and silica sand, and acid clay (see paragraph [0017]). An acidic material is added as a pH adjuster to produce a porous body used, for example, for the culture of acidophilic fungi. Like bentonite, acid clay is a kind of clay containing montmorillonite as a main component.

In the porous body production methods disclosed in the above published patent applications, a glass is foamed (JP 2002-321988 A) or a foamed glass is used (JP 2001-302366A) to increase the specific surface area of the resulting porous body. However, the types of glasses that can be used in these production methods are significantly limited.

JP 04(1992)-51496 B discloses a porous body (porous sintered glass) that can be produced without the need to foam a glass or without the use of a foamed glass. Therefore, there is more freedom in choosing a glass for use in the production of the porous sintered glass. This porous sintered glass is produced by firing a mixture of a glass powder and an inorganic salt such as potassium sulfate and then leaching the inorganic salt from the sintered body. A solvent (for example, water) is used to leach the inorganic salt. Borosilicate glass and soda-lime glass are disclosed as glasses to be contained in the glass powder. In Examples of JP 04(1992)-51496 B, the firing is carried out at a temperature lower than the melting point of the inorganic salt and higher than the softening point of the glass.

The porous body production method disclosed in JP 04(1992)-51496 B has advantages that a variety of glasses can be used with fewer limitations and that the pore volume of the porous body can be controlled easily. According to this production method, a porous body can be produced from an industrially mass-produced glass as typified by soda-lime glass. However, if a porous body is produced from a glass having a high content of alkali components according to the production method of JP 04(1992)-51496 B and the resulting porous body is immersed in an aqueous solution, the alkali components in the glass leach into the aqueous solution and increase the pH thereof significantly. Such a significant increase in the pH of the solution surrounding the porous body, particularly the inside of the pores of the porous body, may inhibit a desired chemical reaction by a supported catalyst or kill microorganisms to be cultured, in some applications of the porous body.

In JP 2002-321.988 A and JP 2001-30230fi A, the clays serving as binders provide sufficient strength for practical use to the porous bodies. In contrast, in JP 04(1992)-51496 B, the glass powder is sintered to provide sufficient strength to the porous sintered glass. Therefore, if another powder having a pH adjusting function is added to the mixture of the glass powder and the inorganic salt to prevent an increase in pH and the resulting mixture is fired, the particles of the glass powders are less likely to stick together, probably causing a decrease in the strength of the resulting porous sintered glass. In Examples of JP 04(1992)-51496 B, some of the samples of porous sintered glass obtained by firing mixtures of only a glass powder and an inorganic salt are regarded as "brittle" or "not sintered" due to high mixing ratios of the inorganic salt to the mixtures.

In order to compensate for the decrease in the strength, a clay suitable for use as a binder can be used, as taught in JP 2002-321988 A and JP 2001-302366 A. A smectite mineral typified by montmorillonite acts as a binder and has an ion exchange capacity derived from its layered crystal structure. Therefore, if a mixture of a glass powder and a smectite mineral is fired, it is expected that the increase in the pH of the resulting porous body can be suppressed while the strength thereof is ensured. The studies by the present inventors show, however, that the use of montmorillonite cannot achieve a satisfactory effect of reducing the increase in the pH.

It is an object of the present invention to provide a porous body having a pH adjusting function by a porous body production method with fewer limitations on the use of glasses.

The present invention provides a method of producing a porous body. The method includes the steps of: preparing a mixture including a glass powder A containing an alkali component, a powder B including at least one crystal selected from a) a clay mineral that has a layered crystal structure and b) a zeolite, and a powder C of a water-soluble inorganic salt, the mixture containing 0.05 to 3 parts by mass of the powder B and 0.2 to 4 parts by mass of the powder C with respect to 1 part by mass of the glass powder A; forming the mixture into a shaped body; firing the shaped body at a temperature lower than a melting point of the water-soluble inorganic salt and equal to or higher than a softening point of the glass contained in the glass powder A to obtain a fired body; and leaching the water-soluble inorganic salt from the fired body to obtain a porous body. The main component of the powder B is at least one crystal selected from a 1:1 type mineral, a 2:1 type mineral other than a smectite mineral, a mixed-layer type mineral, a 2:1 ribbon type mineral, and a zeolite.

As stated in this specification, "a main component" refers to a component that makes up 50% by mass or more, preferably 70% by mass or more of a material.

In another aspect, the present invention provides a porous body including: a glass powder A containing an alkali component; and a powder B including at least one crystal selected from a) a clay mineral that has a layered crystal structure and b) a zeolite. The main component of the glass powder A is a non-porous powder, and the main component of the powder B is at least one crystal selected from a 1:1 type mineral, a 2:1 type mineral other than a smectite mineral, a mixed-layer type mineral, a 2:1 ribbon type mineral, and a zeolite. The porous body has a pore volume of 0.1 mL/g or more, and the porous body has an ion exchange capacity that is derived from the crystal.

According to the porous body production method of the present invention, the specific surface area of the porous body can be increased by leaching the water-soluble inorganic salt. Therefore, there is no need to use a glass that foams by heating or a foamed glass to obtain the glass powder A, and a variety of glasses can be used with fewer limitations. Furthermore, according to the production method of the present invention, the specific surface area of the porous body can be controlled easily by adjusting the amount of the powder C of the water-soluble inorganic salt.

In the production method of the present invention, the powder B having a pH adjusting function is added as one of the materials. The powder B is at least one selected from a clay mineral that has a layered crystal structure and a zeolite, and has an ion exchange capacity (cation exchange capacity) derived from the layered crystal structure of the clay mineral or the microporous structure of the zeolite. The powder B is a component that takes advantage of this ion exchange capacity to provide the pH adjusting function to the porous body. Focusing not on the function as a binder but on the ion exchange capacity, the present invention selects the main component of the crystal, such as a clay mineral, contained. A smectite mineral typified by montmorillonite is an excellent binder but is poor in its ion exchange capacity in a porous body obtained after a high-temperature firing. The influence of a pH change caused by alkali components contained in the glass can be reduced effectively by mainly adding a crystal having a high ion exchange capacity.

In one aspect, the present invention provides a porous body that can be produced for the first time by the method of the present invention. This porous body has a pore volume of 0.1 mL/g or more and has a pH adjusting function derived from the ion exchange capacity of the powder B, although the main component of the glass powder A is a non-porous powder. The pH adjusting function of the porous body of the present invention makes it more suitable as a support for microorganisms, catalysts, etc.

In the production method of the present invention, the materials of the porous body are at least a glass powder A containing an alkali component, a powder B including at least one crystal selected from a) a clay mineral that has a layered crystal structure and b) a zeolite, and a powder C of a water-soluble inorganic salt.

The glass powder A should be composed of an alkali-containing glass. Since a high melting temperature is required to produce an alkali-free glass, its industrial production cost is high. Therefore, at present, most of industrially-produced glasses contain alkali components. The present invention is advantageous in producing a porous body because the glass powder A composed of a mass-produced, general purpose alkali-containing glass can be used.

Various types of alkali-containing glasses, more specifically, glass compositions called soda-lime glass, borosilicate glass, aluminosilicate glass, etc. may be used. A glass containing, as a main component, a network forming oxide of an element other than silicon, such as phosphate glass, also may be used. However, in view of water resistance, etc., preferred is silicate glass containing silicon dioxide (SiO₂) as a main network forming oxide.

"Alkali components" are alkali metal elements, to be exact. Specific examples of the alkali components include lithium, sodium, and potassium. Generally, industrially-produced glasses have the highest content of sodium among these alkali components. If a porous body contains alkali components, the alkali components in the porous body leach into an aqueous solution and the pH of the aqueous solution increases accordingly. This pH change may reduce the activity of microorganisms or catalysts supported on the porous body. However, the addition of the powder B enables the pH change caused by the leaching of the alkali components to be suppressed.

Therefore, in the present invention, there is little need to severely limit the content of the alkali components in the glass. This may be true, but the fact remains that an excessively high content of alkali components is responsible for a significant change in the pH of the aqueous solution. For this reason, the glass contained in the glass powder A preferably has an alkali metal oxide content of less than 25% by mass, and more preferably less than 20% by mass, in its composition.

Generally, the softening point of a glass tends to decrease as the content of alkali metal oxides increases. In order to increase the strength of the porous body, it is desirable that the glass powder A be softened enough to allow the sintering to proceed in the firing step. Therefore, the glass contained in the glass powder A preferably has an alkali metal oxide content of more than 10% by mass, and more preferably more than 12% by mass, in its composition.

Conventionally, natural glass foams (for example, perlite and shirasu balloon) or waste glasses (for example, slag glass) that foam by heating have commonly been used as materials for porous glassy bodies to increase the specific surface areas of the bodies. Not all of this particular kind of natural materials have a desired specific surface area, and not all of this particular kind of waste materials have a desired foaming property. Therefore, it is not always easy to control the specific surface area of the resulting porous body. In contrast, the production method of the present invention enables the specific surface area of the porous body to be controlled by controlling the mixing ratio of the raw materials, while eliminating the need for such particular kinds of glasses.

In the present invention, the glass powder A may be composed of a foamed material or a foamable material capable of foaming when heated. In a preferred embodiment of the production method of the present invention, however, the main component of the glass powder A used as one of the materials of the porous body is a non-foamable powder (non-porous powder) incapable of foaming when heated. In a preferred embodiment of the porous body of the present invention, the main component of the glass powder A is a non-porous powder.

The powder B should be composed of at least one crystalline material selected from a) a clay mineral having a layered crystal structure and b) a zeolite. This crystalline material has an ion exchange capacity (cation exchange capacity) derived from the layered crystal structure of the clay mineral or the microporous structure of the zeolite.

Clay minerals are basically hydrous silicates and many of them have layered crystal structures. Clay minerals having layered crystal structures are classified according to their crystal structures into 1:I type minerals, 2:1 type minerals, mixed-layer type minerals, and 2:1 ribbon type minerals.

Minerals belonging to the 1:1 type include: kaolin minerals such as kaolinite, dickite, nacrite, and halloysite; serpentine minerals such as chrysotile, lizardite, and antigorite; and serpentine-like minerals such as pecoraite, nepouite, greenalite, caryopilite, amesite, aluminum-lizardite, berthierine, brindleyite, kellyite, and cronstedtite.

Minerals belonging to the 2:1 type include: pyrophyllite-talc minerals such as pyrophyllite, talc, kerolite, willemseite, pimelite, and minnesotaite; mica clay minerals such as illite, sericite, glauconite, celadonite, tobelite, and trioctahedral illite; chlorite minerals such as clinochlore (Mg chlorite), FeMg chlorite, chamosite (Fe chlorite), nimite, pennantite, donbassite, sudoite, and cookeite; vermiculite minerals such as dioctahedral vermiculite, and trioctahedral vermiculite; and smectite minerals such as montmorillonite, beidellite, nontronite, saponite, hectorite, and stevensite.

Minerals belonging to the mixed-layer type include: dioctahedral mica-dioctahedral smectite, dioctahedral chlorite-dioctahedral smectite, kaolin-montmorillonite, rectorite, tosudite, biotite-trioctahedral vermiculite, trioctahedral chlorite-trioctahedral vermiculite, trioctahedral chlorite-trioctahedral smectite, hydrobiotite, and corrensite.

Minerals belonging to the 2:1 ribbon type include: sepiolite, and palygorskite.

All of the clay minerals listed above have ion exchange capacities derived from their layered crystal structures. Studies by the present inventors show that smectite minerals typified by montmorillonite are limited in their ion exchange capacities when they are used in porous bodies obtained by firing. Smectite minerals are known as minerals that swell up when they come in contact with water because the bonding strength between layers in smectite minerals is relatively lower than that in other minerals. Presumably, smectite minerals are susceptible to swelling by the entry of water or the like and to dehydration by the subsequent heating during the porous body production process, resulting in a breakdown of the layered crystal structure. Typical examples of the clay containing a smectite mineral as a main component are bentonite, acid clay, etc. These highly plastic clays have excellent properties as inorganic binders (see JP 2001-302366 A), but they are not suitable for providing ion exchange capacities to porous bodies.

Therefore, it is preferable that the main component of the clay mineral be at least one crystal selected from a 1:1 type mineral, a 2:1 type mineral other than a smectite mineral, a mixed-layer type mineral, and a 2:1 ribbon type mineral.

Zeolite is a mineral having a porous three-dimensional network structure. Zeolite does not have a layered crystal structure but the porous structure (micropores) of zeolite allows it to exhibit the ion exchange capacity. At least one zeolite selected, for example, from analcime, wairakite, laumonite, clinoptilolite, and mordenite can be used.

It should be noted that the pH range to be achieved by the ion exchange capacity of the powder B varies with the type of the crystal included in the powder B. It is desirable to select a crystal suitable for the intended use of the porous body. For example, kaolinite is suitable for adjusting the pH to about 4, talc to about 10, sericite to about 7, sepiolite to about 8, and mordenite to about 7, respectively.

The powder C should be composed of a water-soluble inorganic salt. The water-soluble inorganic salt is not particularly limited as long as it is soluble in water and can be used to form the pores of the porous body. The water-soluble inorganic salt must remain undissolved during the firing step of the production of the porous body. For this purpose, the melting point of the water-soluble inorganic salt preferably is higher than 700°C, further preferably higher than 730°C, and particularly preferably higher than 750°C. Examples of the water-soluble inorganic salt having such a high melting point (mp) include: halides such as sodium chloride (mp: 800°C), and potassium chloride (mp: 770'C); and sulfates such as sodium sulfate (mp: 880°C), potassium sulfate (mp: 1070°C), and magnesium sulfate (mp: 1185°C).

It is desirable that the melting point of the inorganic salt of the powder C be higher than the softening point of the glass contained in the glass powder A. This is because, in order to fuse the particles of the glass powder A together to increase the strength of the porous body for practical use, it is desirable to fire the granular porous body at a temperature equal to or higher than the softening point of the glass contained in the glass powder A. For that purpose, the water-soluble inorganic salt is required to remain unleached. The softening point of soda-lime glass is about 730°C, and that of borosilicate glass is about 820°C.

Preferably, the mixture as a material of the porous body contains an organic binder in addition to the powders A to C. The organic binder is not an essential component, but it increases the formability (granulation properties) of the mixture. Examples of the organic binder include: polysaccharides such as methyl cellulose, carboxymethylcellulose, crystalline cellulose, agarose (agar), and starch; and polymer compounds such as polyvinyl alcohol and polyvinyl butyral. Preferably, 1 to 20 parts by mass of the organic binder is added per 100 parts by mass of the total of the powders A to C.

The organic binder serves to maintain the connected state of the powders A to C during the firing step, and helps the progress of sintering accompanied by the softening and partial fluidization of the glass powder A contribute to increasing the strength of the porous body. Organic binders themselves generally have not been thought to contribute significantly to ensuring the strength of porous bodies because they are burned out during high-temperature firing (see right column on page 2 to left column on page 3 of JP 04(1992)-51496 B). However, in the firing step of the present invention, the organic binder serves to maintain the connected state of the powders A to C in a low temperature range where the glass powder A is not softened. The organic binder is burned out in a higher temperature range, but a part of the glass powder A flows and allows the sintering to proceed in the high temperature range. Therefore, the strength of the porous body is ensured. The addition of the organic binder enables the porous body having practical strength to be obtained even if the powder B and the powder C are mixed with the glass powder A.

The raw materials for the porous body are not limited to the above ones, and a water reducing agent, an inorganic powder other than the powders A to C, etc. may be added as appropriate. Suitable water reducing agents include surfactants such as salts of highly condensed naphthalene sulfonic acid/formaldehyde condensates, salts of highly condensed melamine sulfonic acid/formaldehyde condensates, and salts of styrene sulfonic acid copolymers. The mixed material can be formed into desired shape (granulated) by adding water as appropriate. In order to prevent the powder C from dissolving in water, the added amount of water should be small enough to keep the water from seeping from the mixed material. When a water reducing agent is used, only a small amount of water can impart formability (granulation properties) to the mixed material. Examples of the inorganic powder other than the powders A to C include alumina, titania, calcium phosphate, magnesium oxide, and zirconia. The surface properties such as hydrophilicity, surface charge, etc. can be controlled by adding these inorganic powders.

The particle sizes of the glass powder A and the powder B preferably are both 200 µm or less in terms of median particle size (D₅₀) in the particle size distribution, further preferably 100 µm or less, and particularly preferably 50 µm or less. The lower limit of D₅₀ is not particularly limited, but powders having a D₅₀ of at least 0.1 µm are used suitably. The particle size of the powder C can be selected as appropriate according to the pore size to be formed. Therefore, a preferable range of particle sizes cannot be determined definitely, but the median particle size (D₅₀) of the powder C can be, for example, 5 µm to 200 µm, like the powders A and B described above.

The above median particle sizes are obtained based on the particle size distributions measured by laser diffraction techniques.

The production method of the present invention begins with the step of preparing the raw material of the porous body. In this step, the material powders A to C are mixed to prepare a mixed material containing 0.05 to 3 parts by mass of the powder B and 0.2 to 4 parts by mass of the powder C with respect to 1 part by mass of the glass powder A. The organic binder also is added to this mixed material as appropriate. When the ratio of the powder B to the mixed material is too low, sufficient pH adjusting effect of the powder B cannot be obtained. When the ratio of the powder C is too low, the specific surface area of the porous body is limited.

On the other hand, as the mixing ratio of the powders B and C to the mixed material increases, the fraction of the connected portions of the glass powder A decreases. As a result, the strength of the porous body might decrease. In view of this, it is preferable to mix the powders A to C so that the total amount of the powders B and C is less than 3.5 parts by mass, particularly less than 3 parts by mass, with respect to 1 part by mass of the glass powder A.

When all these things are considered, the powder B is mixed more preferably in an amount of 0.1 to 2 parts by mass with respect to 1 part by mass of the glass powder A. The powder C is mixed more preferably in an amount of 0.2 to 2 parts by mass, and further preferably 0.5 to 2 parts by mass, with respect to 1 part by mass of the glass powder A. The powder C may be mixed in an amount of 1 to 2 parts by mass on a case-by-case basis.

In order to achieve their full effects, the total amount of the powders B and C may be increased to 1.2 parts by mass or more with respect to 1 part by mass of the glass powder A. It is particularly desirable to add the organic binder to the mixed material when the total mixing ratio of the powders B and C is increased to this level.

Next, the step of forming the prepared mixture into a shaped body is carried out. Known forming techniques such as extrusion, agitation granulation, and rolling can be used to perform this forming step. The shaped body typically is in the form of granules but is not limited to this form. The shaped body may be hollow tubes, which are too large to be called "granules". The granules may be spherical, barrel-shape, parallelepiped-shaped, etc.

Subsequently, the step of firing the shaped body (unfired body) in the form of granules or the like is carried out to obtain a fired body. The shaped body is fired at a temperature lower than the melting point of the water-soluble inorganic salt of the powder C and equal to or higher than the softening point of the glass contained in the glass powder A. Therefore, when a sodium chloride powder is used as the powder C, the firing temperature should be lower than 800°C. When a soda-lime glass powder is used as the powder A, the firing temperature should be equal to or higher than 730°C. When the firing temperature of the shaped body is too high, the crystals of the powder B may be lost or the crystallinity thereof may decrease due to a phase change, etc. Therefore, such an excessively high firing temperature should be avoided. When these things are considered altogether, the firing temperature preferably is equal to or higher than the softening point of the glass contained in the glass powder A but not higher than (the softening point + 50°C) that is a temperature 50°C higher than the softening point of the glass, and further preferably equal to or higher than the softening point but not higher than (the softening point + 30°C). In a preferred embodiment of the present invention, the glass contained in the glass powder A has an alkali metal oxide content of 10% by mass or more in its composition, and the firing temperature is set within the above-mentioned range of temperatures not greatly exceeding the softening point of this glass.

Finally, the step of leaching the water-soluble inorganic salt from the fired body is carried out to obtain a porous body. A solvent used in this step is not particularly limited as long as it can dissolve the inorganic salt. A polar solvent other than water may be used, but water is the safest and easiest to use. The water-soluble inorganic salt can be washed away from the fired body with water. Hot water may be used to increase the leaching rate of the water-soluble inorganic salt depending on the type thereof, or the fired body may be vibrated by ultrasonic waves or the like if the leaching must be accelerated.

The porous body of the present invention have pores formed by the leaching of the powder C, and these pores allow the porous body to function as a support. The pore volume of the porous body is 0.1 mL/g or more, preferably 0.2 mL/g or more, and more preferably 0.5 mL/g or more. In the porous body having a pore volume in this range, the presence of continuous pores can be observed with a scanning electron microscope.

The practical strength required for a support can be ensured by the sintering of the powder A. The porous body of the present invention can have a fruit firmness of 0.02 kg or more, and further 0.1 kg or more in some cases. The porous body can have this level of strength even if it does not contain a smectite mineral as the powder B.

The porous body having a pH adjusting function of the present invention is useful as a support used for the culture of microorganisms, a support for catalysts, etc. Favorable pH environment for microorganisms to be cultured can be created by selecting an appropriate clay mineral. Generally, animal cells prefer a neutral pH environment (pH 6.8 to 7.2), and yeasts for ethanol production, for example, prefer an acidic environment (pH 3 to 5), although the favorable environment for yeasts depends on the type thereof.

When the porous body is used as a support for a cobalt catalyst for desulfurization, the desulfurization performance of this catalyst increases in an acidic environment (pH 2 to 4).

Recently, the possible use of porous bodies in the field of decontamination have been studied from the standpoint of environmental protection. For example, in the treatment to prevent the leaching of contaminants in soils, a pH range suitable for the treatment with a treatment agent (such as an adsorbent or an anti-leaching agent) is limited. In addition, the pH of the treatment environment changes easily by external factors such as the seepage of rainwater, the action of microorganisms, etc. Therefore, when a porous body having a pH adjusting function is used as a support for such a treatment agent, the activity of the treatment is expected to be enhanced. Furthermore, when a porous body having a pH adjusting function is used as a support in removing heavy metals from wastewater, the efficiency of the treatment is expected to be enhanced. In the field of decontamination, the pH to be adjusted varies significantly depending on the substance to be adsorbed (for example, pH 8 to 10 for disposal of boron, pH 3 to 8 for disposal of fluorine, and pH 3 to 10 for disposal of arsenic). A proper selection of a clay mineral to be used in the porous body of the present invention makes it possible to treat contaminants while controlling the environment surrounding a treatment agent to keep the pH of the environment within a desired range.

### EXAMPLES

### (Examples 1 to 8 and Comparative Examples 1 to 5)

A non-porous glass powder made of soda-lime glass (powder A with a D₅₀ of 20 µm), a clay mineral powder (powder B with a D₅₀ of 50 µm), and a sodium chloride powder (powder C with a D₅₀ of 20 µm), with a total mass of 100 g, were mixed at a mass ratio shown in Table 1, and methyl cellulose (2g of organic binder) was added to the mixture of the powders A to C. Thus, a mixed material was prepared for each example. The soda-lime glass has a total alkali metal oxide content of about 14% by mass in its composition.

Next, an extruder was used to extrude the mixed material into cylindrical granules with a diameter of 2 to 3 mm and a length of 2 to 6 mm. Subsequently, the granules were fired in an electric furnace maintained at a predetermined temperature for 2 hours (3 hours in Comparative Example 12) to obtain a granular fired body.

Then, the granular fired body was washed with water to leach sodium chloride from the granular fired body. Thus, a granular porous body was produced.

The fruit firmness and the pore volume of the granular porous body thus produced were measured.

The fracture strengths of 50 granules of the granular porous body were measured with a fruit pressure tester ("KM-01", Fujiwara Scientific Company Co., Ltd.), and their average value was used as the fruit firmness of the granular porous body.

The pore volume was measured with a mercury porosimeter ("Autopore III 9420", Micromeritics Instrument Corporation).

It was observed with a scanning electron microscope whether or not continuous pores were formed in the granular porous body. In some porous bodies in which a small number of small pores were observed on the surface thereof, all these pores were isolated from each other. In other porous bodies in which pores grew and larger pores were observed, the presence of continuous pores was confirmed.

Table 1 shows the results of the measurements collectively.

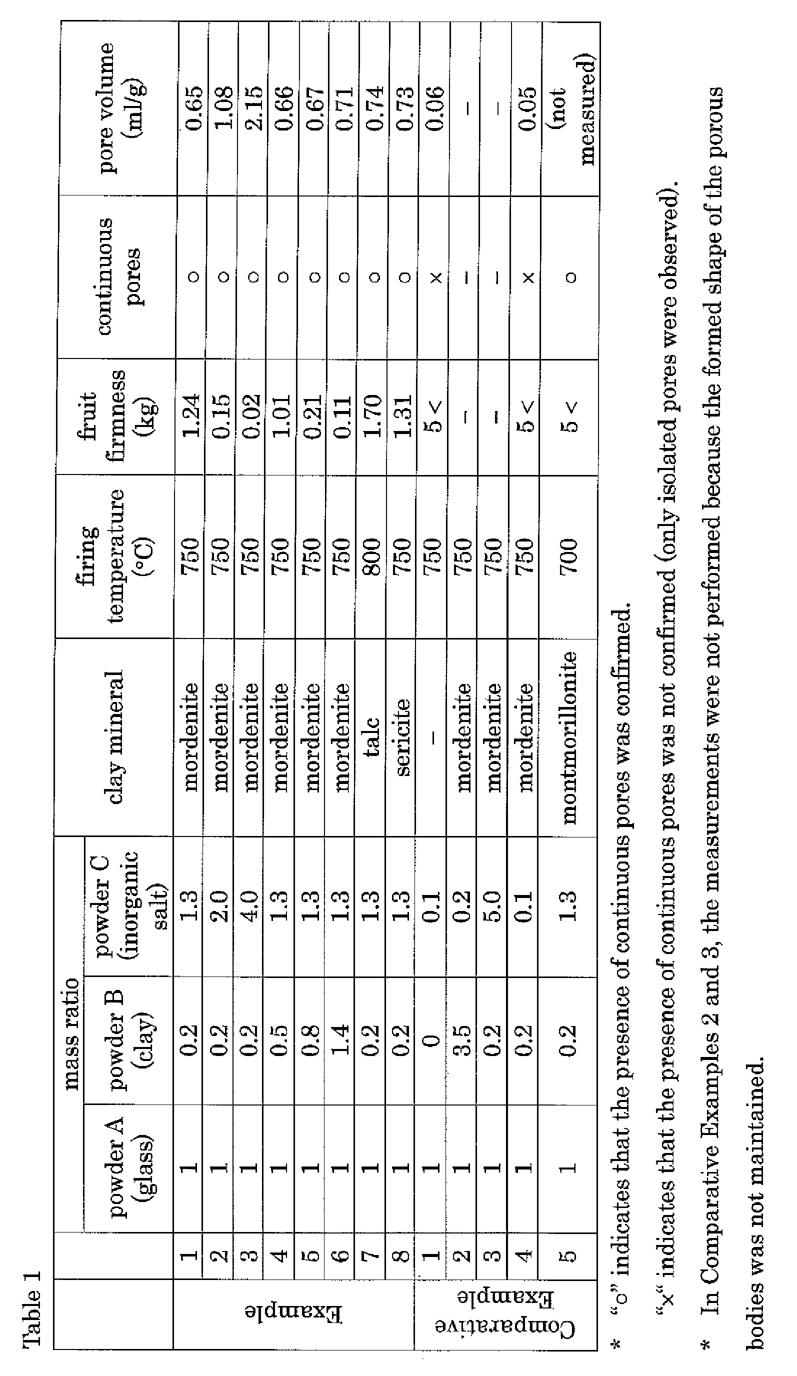

In Comparative Examples 2 and 3, the shape of the porous bodies was not maintained because the ratio of the powder B or the powder C was too high. In Comparative Examples 1 and 4, the values of the pore volumes were too small because the ratio of the powder C was too low.

Examples 1 to 8 were compared with one another. The fruit firmnesses of 0.1 kg or more were obtained in all examples except for Example 3, which had a slightly lower value due to a slightly higher ratio of the powder C. Furthermore, the fruit firmnesses of 0.15 kg or more were obtained in all examples except for Example 3 mentioned above and Example 6, which had a slightly high ratio of the powder B.

As shown in Comparative Example 5, when montmorillonite was used as the powder B, the strength of the resulting porous body increased significantly. Presumably, this is because montmorillonite acted as an inorganic binder to increase the bond strength between the particles of the powder A. It was confirmed that continuous pores were present in the porous body of Comparative Example 5. Montmorillonite, however, exerted only a limited pH adjusting effect, as shown below.

### (Examples 9 to 17 and Comparative Examples 6 to 12)

2g of each of the granular porous bodies obtained in the same manner as mentioned above was immersed in 20g of test liquid for 10 days, and then the pH of the test liquid was measured. During the measurement period, the test liquid was maintained at a temperature of 25°C. Table 2 shows the results.

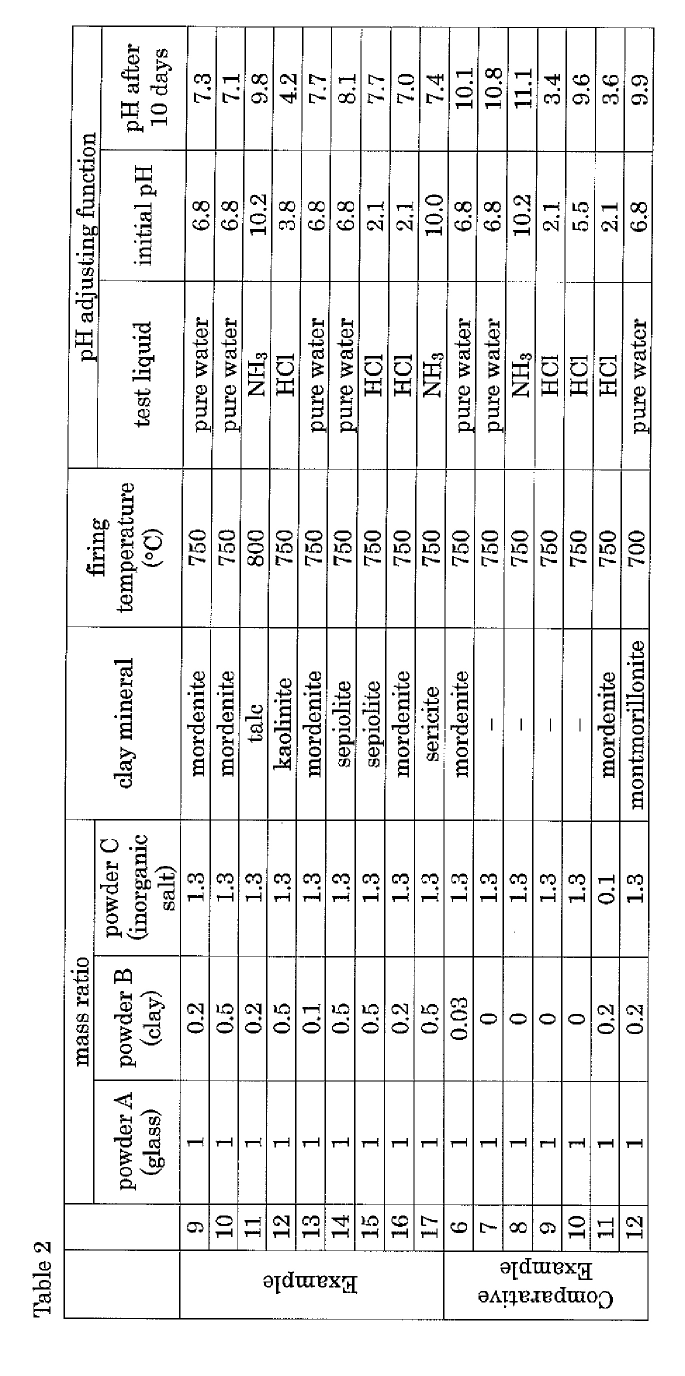

The results of Comparative Examples 7 to 10 show that the leaching of the alkali components from the powder A increased the pH of the test liquid (aqueous solution). A comparison between Examples 9 and 10 and Comparative Examples 6 and 7 confirms that the presence of the powder B suppressed the pH change of the aqueous solution. This pH adjusting function is derived from the ion exchange capacity of mordenite (mordenite has a function of controlling the pH of an aqueous solution at about 7).

The pH range of the aqueous solution to be controlled varies with the type of clay minerals used. Talk has the effect of stabilizing the pH of the aqueous solution at about 10, kaolinite at about 4, sepiolite at about 8, and sericite at about 7, respectively. As shown in Examples 9 to 12, a proper selection of a clay mineral for the pH of the aqueous solution made it possible to suppress the pH change within 0.5 for 10 days. This proves that a proper use of at least one selected from these minerals makes it possible to stabilize the environment in the pores of the porous body within a desired range of pH values selected from a wide range thereof. Mordenite is a zeolite mineral, and has the effect of stabilizing the pH of an aqueous solution at about 7.

In Comparative Example 12, in order to surely maintain the layered crystal structure of montmorillonite used therein, firing was carried out at a temperature lower than the firing temperatures in other examples in which clay minerals other than montmorillonite were used. Since montmorillonite is a natural clay mineral with an ion exchange capacity, it exhibits the effect of stabilizing the pH of an aqueous solution at about 9 under normal conditions. As shown in Comparative Example 12, however, montmorillonite exhibited only a limited ion exchange capacity, presumably due to a decrease in its crystallinity. As a result, the pH of the aqueous solution increased to about 10.

The present invention can provide porous bodies having a pH adjusting function, which can be used as supports for catalysts, supports for contaminant treatment agents, porous bodies for living cell culture, etc., and therefore has high applicability.

## Claims

1. A method of producing a porous body, comprising the steps of
preparing a mixture comprising a glass powder A containing an alkali component, a powder B including at least one crystal selected from a) a clay mineral that has a layered crystal structure and b) a zeolite, and a powder C of a water-soluble inorganic salt, the mixture containing 0.05 to 3 parts by mass of the powder B and 0.2 to 4 parts by mass of the powder C with respect to 1 part by mass of the glass powder A;
forming the mixture into a shaped body;
firing the shaped body at a temperature lower than a melting point of the water-soluble inorganic salt and equal to or higher than a softening point of the glass contained in the glass powder A to obtain a fired body; and
leaching the water-soluble inorganic salt from the fired body to obtain a porous body,
wherein a main component of the powder B is at least one crystal selected from a 1:1 type mineral, a 2:1 type mineral other than a smectite mineral, a mixed-layer type mineral, a 2:1 ribbon type mineral, and a zeolite.

2. The method of producing a porous body according to claim 1, wherein the mixture further comprises an organic binder.

3. The method of producing a porous body according to claim 2, wherein the mixture contains a total of 1.2 parts by mass or more of the powders B and C with respect to 1 part by mass of the glass powder A.

4. The method of producing a porous body according to claim 1, wherein a main component of the glass powder A is a non-porous powder.

5. The method of producing a porous body according to claim 1, wherein the glass contained in the glass powder A has an alkali metal oxide content of more than 10% by mass in its composition.

6. The method of producing a porous body according to claim 5, wherein the shaped body is fired at a temperature equal to or higher than the softening point of the glass but not higher than a temperature 50°C higher than the softening point of the glass.

7. The method of producing a porous body according to claim 1, wherein the melting point of the water-soluble inorganic salt is higher than 730°C.

8. A porous body comprising:
a glass powder A containing an alkali component; and
a powder B including at least one crystal selected from a) a clay mineral that has a layered crystal structure and b) a zeolite,
wherein a main component of the glass powder A is a non-porous powder,
a main component of the powder B is at least one crystal selected from a 1:1 type mineral, a 2:1 type mineral other than a smectite mineral, a mixed-layer type mineral, a 2:1 ribbon type mineral, and a zeolite,
the porous body has a pore volume of 0.1 mL/g or more, and
the porous body has an ion exchange capacity that is derived from the crystal.

9. The porous body according to claim 8, wherein the glass contained in the glass powder A has an alkali metal oxide content of more than 10% by mass in its composition.

10. The porous body according to claim 8, wherein the porous body contains 0.05 to 3 parts by mass of the powder B with respect to 1 part by mass of the glass powder A.

11. The porous body according to claim 10, wherein the porous body contains 0.1 1 to 2 parts by mass of the powder B with respect to 1 part by mass of the glass powder A.

12. The porous body according to claim 8, wherein the powder B is a powder including a crystal of a clay mineral that has a layered crystal structure.

13. The porous body according to claim 12, wherein the powder B is a powder including at least one crystal selected from talc, sericite, kaolinite, and sepiolite.

14. The porous body according to claim 8, wherein the powder B is a powder including mordenite.
